# EUROPEAN PATENT APPLICATION

(11) **EP 3 421 329 A1**
(43) Date of publication of application: **02.01.2019**
(21) Application number: 18179504.8
(22) Date of filing: 25.06.2018
(51) Int. Cl.: B62D 15/02, G08G 1/16

(54) **METHOD AND A SYSTEM FOR AUTOMATICALLY PROVIDING A PARKING SLOT FOR A MOTOR VEHICLE**

(30) Priority: 27.06.2017 DE 102017114190
(71) Applicant: Valeo Schalter und Sensoren GmbH, 74321 Bietigheim-Bissingen (DE)
(72) Inventor: Profidia, Andrea, 74321 Bietigheim-Bissingen (DE); Gehin, Frederic, 94046 Creteil (FR)

(57) **Abstract**

The present invention refers to a method for automatically providing a parking slot (28) for a motor vehicle (10), which parking slot (28) is limited by at least one further motor vehicle (14, 16), the method comprising the following steps:
Detecting a possible request to park the vehicle (10) into the parking slot (28) as well as a minimum size of the parking slot (Wmin) required for parking this vehicle (10) and the size of the parking slot determined by the current position of the at least one further motor vehicle (14, 16) respectively out of a position external to the vehicle (10) to be parked, and Adjusting the position of the at least one further motor vehicle (14, 16) such that the size of the parking slot (W) corresponds at least to the minimum size (Wmin) of the parking slot (28) required for parking the vehicle (10).

The present invention also refers to a corresponding computer program product for executing the method and a corresponding system for automatically providing a parking slot (28) for a motor vehicle (10).

## Description

The present invention refers to a method and a system for automatically providing a parking slot for a motor vehicle, which parking slot is limited by at least one further motor vehicle. The present invention also refers to a corresponding computer program product for executing the method.

Document EP 2 886 420 A1 describes a method for causing a sending of a parking directive, the method comprising the following steps performed by the vehicle to be parked: identifying a parking region for the vehicle; identifying an object within the parking region; determining that sufficient space exists within the parking region for creation of a parking space, the parking space being a portion of the parking region that is dimensioned to allow the vehicle to enter the parking space and exit the parking space; determining a parking directive based, at least in part, on the parking space and the object; and causing sending the parking directive. The method is, e.g., performed by the parking assistance of the vehicle to be parked.

It is an object of the present invention to provide a method and a system for automatically providing a parking slot for a motor vehicle, wherein the method/system does not require any special technical requirements of the motor vehicle to be parked.

This object is achieved by the independent claims. Advantageous embodiments are given in the dependent claims.

In particular, the present invention provides a method for automatically providing a parking slot for a motor vehicle, which parking slot is limited by at least one further motor vehicle, the method comprising the following steps: (i) Detecting (a) a possible request to park the vehicle into the parking slot as well as (b) a minimum size Wmin of the parking slot required for parking the vehicle and (c) the size W of the parking slot determined by the current position of the at least one further motor vehicle, each detection performed respectively out of a position external to the vehicle to be parked, and (ii) Adjusting the position of the at least one further motor vehicle such that the size of the parking slot W' corresponds at least to the minimum size Wmin of the parking slot required for parking the vehicle (W' ≥ Wmin). The possible request to park the vehicle into the parking slot is preferably detected by recognising a typical start position of the motor vehicle for starting a parking manoeuvre into the parking slot or by a parking request of the driver of said motor vehicle, e.g. via air interface of a communication device/remote control. The position of the at least one further motor vehicle is adjusted by moving the corresponding further motor vehicle(s) to enlarge the size of the parking slot at least to the minimum size Wmin of the parking slot required for parking the vehicle (W' ≥ Wmin). "The motor vehicle" is the motor vehicle to be parked and "the further motor vehicles" are already parked motor vehicles.

The basic idea of the invention is to provide a sufficiently large parking slot for a motor vehicle indicating a request to park into said parking slot without any further technical requirements of said motor vehicle to be parked ("ego vehicle").

According to a preferred embodiment of the invention the position external to the vehicle to be parked is the position of at least one of the further motor vehicles or at least one traffic infrastructure device. The corresponding traffic infrastructure can be a street lighting, a parking meter system, a parking guidance system, etc.

According to a particularly preferred embodiment of the invention the detection step is performed by at least one sensor of the at least one further motor vehicles and/or of the at least one traffic infrastructure device. Thus the detection step is performed out of a position external to the motor vehicle to be parked. The at least one sensor preferably is at least one camera and/or at least one ultrasonic sensor and/or at least one radar sensor and/or at least one LIDAR sensor (LIDAR: Light detection and ranging).

According to another preferred embodiment of the invention the minimum size Wmin of the parking slot required for parking the vehicle is determined by measuring the length L of said motor vehicle and/or by identifying the vehicle type of said motor vehicle and, e.g., looking up the length L of said vehicle type in a look-up table.

According to yet another preferred embodiment of the invention the adjustment of the position of the further motor vehicle or at least one of the further motor vehicles is a moving of said further motor vehicle performed by use of a driver assistance devices of the corresponding further motor vehicle. The driver assistance device gets a corresponding command for performing the adjustment. Such a device is also known as ADAS (Advanced Driver Assistance System).

Advanced driver-assistance systems (ADAS) are systems developed to automate/adapt/enhance vehicle systems for safety and better driving. Safety features are designed to avoid collisions and accidents by offering technologies that alert the driver to potential problems, or to avoid collisions by implementing safeguards and taking over control of the vehicle. Adaptive features may automate lighting, provide adaptive cruise control, automate braking, incorporate GPS/ traffic warnings, connect to smartphones, alert driver to other cars or dangers, keep the driver in the correct lane, or show what is in blind spots. All the above mentioned sensors (camera, ultrasonic sensor, radar sensor, LIDAR sensor) are well known sensors in connection with ADAS.

According to another preferred embodiment of the invention the adjustment of the position of the at least one further motor vehicle is controlled by a control device of a system for automatically providing the parking slot. This control device is giving the corresponding command.

According to another preferred embodiment of the invention the control device is part of one of the further motor vehicles or part of the at least one traffic infrastructure device. This control device can, e.g., be an integral part of the traffic infrastructure, e.g. a street lamp of the street lighting, a parking machine of the parking meter system, etc.

According to yet another preferred embodiment of the invention the method comprises a further step of: Determining whether there is sufficient space for adjusting the position of the further motor vehicles such that the size W' of the parking slot corresponds at least to the minimum size Wmin of the parking slot.

The computer program product according to the invention comprises computer-executable program code portions having program code instructions configured to execute the aforementioned method.

The present invention further relates to a system for automatically providing a parking slot for a motor vehicle, which parking slot is limited by at least one further motor vehicle, the system comprises at least one sensor for monitoring the traffic and a control device for controlling an adjustment of the position of the further motor vehicle or at least one of the further motor vehicles and is configured to perform the following steps: (i) Detecting (a) a possible request for parking the vehicle into the parking slot as well as (b) a minimum size Wmin of the parking slot required for parking this vehicle and (c) the size W of the parking slot determined by the current position of the at least one further motor vehicle, each detection performed out of a position external to the vehicle to be parked by use of the at least one sensor; and (ii) Commanding an adjustment of the position of the at least one further motor vehicle by use of the control device such that the size W' of the parking slot corresponds at least to the minimum size Wmin of the parking slot required for parking the vehicle (W' ≥ Wmin). The corresponding adjustment of the position of the one or more further motor vehicles will be performed by this/these further motor vehicle(s), especially by use of a respective driver assistance devices of said further motor vehicle(s).

According to a preferred embodiment of the invention the system is arranged for performing the aforementioned method.

According to another preferred embodiment of the invention the control device is arranged for adjusting the position of the further motor vehicle or at least one of the further motor vehicles by use of one or more driver assistance devices of the corresponding further motor vehicle(s). The driver assistance device is adjusting the position of the further motor vehicle by moving said further motor vehicle.

According to yet another preferred embodiment of the invention the control device is a computerised control device, which control device comprises a processor and a memory. This computerised control device is arranged for an interaction with the aforementioned computer program product.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

In the drawings:
- Fig. 1: shows a top view of a road scene with a motor vehicle to be parked and a system for automatically providing a parking slot for said motor vehicle according to a preferred embodiment of the invention; and
- Fig. 2: shows a top view of the road scene with the parking slot for the motor vehicle already provided by the system.

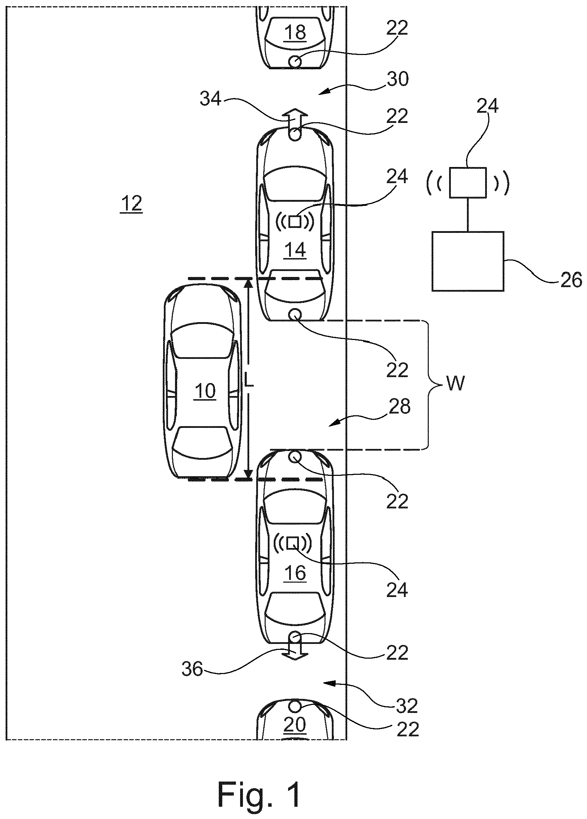

Fig. 1 shows a top view of a motor vehicle 10 driving on a road 12. This motor vehicle 10 is a passenger car in the shown example. At the edge of the road 12 there is a number of further motor vehicles 14, 16, 18, 20 parked in a row. Each of the further motor vehicles 14, 16, 18, 20 comprises a driver assistance device (not shown) with two sensors 22 and a communication device 24. The sensors 22 are located at the front area and the rear area of the individual further motor vehicle 14, 16, 18, 20. In the example shown in the figures the sensors 22 are cameras. The individual communication device 24 allows a communication with the driver assistance devices of other further motor vehicles and traffic infrastructure devices, which devices comprise a corresponding communication device 24. Beside the road 12 there is such a traffic infrastructure device comprising a communication device 24 connected to a control device 26 of a system for automatically providing a parking slot 28 for a motor vehicle 10. Said system comprises the sensors 22 of the further motor vehicles 14, 16, 18, 20 beside the control device 26, wherein control device 26 and the further motor vehicles 14, 16, 18, 20 are communicating via the communication devices 24. All communication devices 24 shown in the example are wireless communication devices. The traffic infrastructure device in the example of Fig. 1 is, e.g., a parking machine of a parking meter system or a street lamp of the street lighting of the road.

The driver of the vehicle 10 is looking for a parking slot at the edge of the road 12. He discovers the parking slot 28 and drives the motor vehicle 10 into a typical start position for starting a parking manoeuvre into the parking slot 28. The system for automatically providing the parking slot 28 will now perform the following steps:
Step 1: Detecting the request for parking the vehicle into the parking slot 28; detecting the minimum size Wmin of the parking slot 28 required for parking this vehicle; and detecting the actual size W of the parking slot 28 determined by the current position of the at least one further motor vehicle 14, 16 by use of at least one of the sensors 22.

The possible request to park the vehicle 10 into the parking slot 28 is preferably detected by recognising a typical start position of the motor vehicle 10 for starting a parking manoeuvre into the parking slot 28 or by a parking request of the driver of said motor vehicle 10, e.g. via a mobile telephone or a remote control, etc.

The minimum size Wmin of the parking slot 28 required for parking the vehicle 10 is determined by measuring the length L of the motor vehicle 10 to be parked or by identifying the vehicle type of the motor vehicle 10 to be parked and looking up the length L of said vehicle type in a look-up table stored, e.g. , in the control device 26.

Step 2: Determining that there is sufficient space 30, 32 for adjusting the position of the further motor vehicles 14, 16 such that the size W' of the parking slot 28 corresponds at least to the minimum size Wmin of the parking slot 28; wherein this determining step is performed by use of at least one of the sensors 22.

Step 3: Adjusting the position of the further motor vehicles 14, 16 by moving said further motor vehicles (arrows 34, 36) using the control device 26 such that the size W' of the parking slot 28 is equal to or bigger than the minimum size Wmin of the parking slot 28 required for parking the vehicle 10 (W' ≥ Wmin).

The moving of the further motor vehicles 14, 16 is performed by use of a driver assistance devices of the corresponding further motor vehicles 14, 16 under control of the control device 26 of the system.

The position of the at least one further motor vehicle is adjusted by moving the corresponding further motor vehicle(s) to enlarge the size of the parking slot at least to the minimum size Wmin of the parking slot required for parking the vehicle (W' ≥ Wmin).

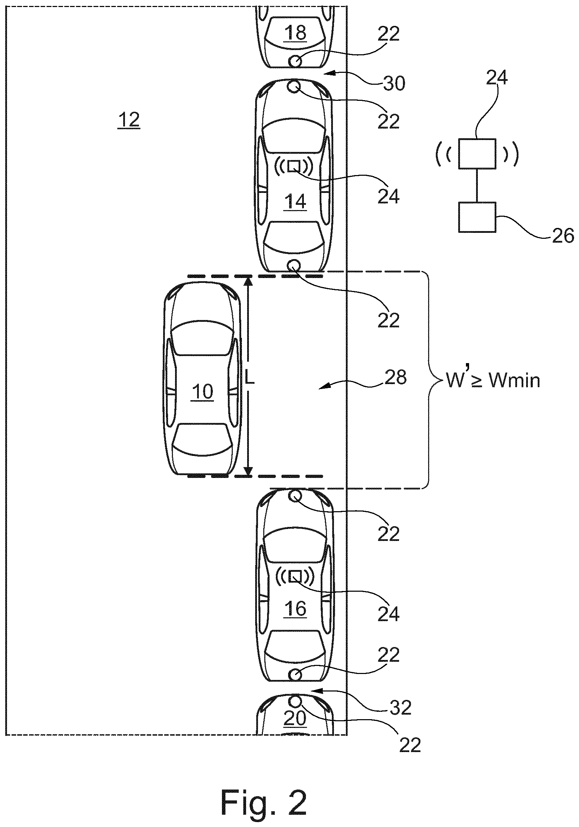

Fig. 2 shows a top view of the road scene after the system has provided the parking slot 28 with an adequate size W' to park the motor vehicle 10. The size W' of the parking slot 28 is equal to or bigger than the minimum size Wmin of the parking slot 28 required for parking the vehicle 10.

In general, the system for automatically providing a parking slot 28 for a motor vehicle can be made up of one or more further motor vehicles 14, 16 and/or a traffic infrastructure with one or more traffic infrastructure devices 26. In the shown example, the system is made up of the further motor vehicles 14, 16 with their sensors 22 and the traffic infrastructure device 26.

In a very simple case all components 22, 24, 26 of the system can be included in one further motor vehicle 14, 16, 18, 20. This further motor vehicle 14 comprises the sensors 22 and a driver assistance device forming the control device 26.

In a more complex case the system is formed with the participation of more than two further motor vehicles 14, 16, 18, 20, wherein the positions of all these further motor vehicles 14, 16, 18, 20 are adjusted such that the size W' of the parking slot 28 is equal to or bigger than the minimum size Wmin of the parking slot 28 required for parking the vehicle 10.

In the following, basic ideas of the invention will be described once more in other words:
Based on the method/system according to the invention and the evaluation of the surrounding environment the vehicles already parked (the further vehicles 14, ..., 20) can move to increase the parking slot 28 for the vehicle 10 that needs to park.

The main advantage of this invention is to permit the parking in slots 28 that are insufficient to park the vehicle 10.

When the driver of the "ego vehicle" 10 or a driverless ego vehicle itself is looking for a parking slot, it finds slot 28, but it is actually insufficient to park, so the system detects the request to park the vehicle 10 and the control device 26 of the system starts communication with the further vehicle 14 to see if it can move forward and increase the space for the parking. Further vehicle 14 activates its sensors (e.g. ultrasonic, radar, cameras) and determine that there a sufficient space 30 in front to move forward. Similar communication and space determination happens with further vehicle 16 for the space 32 behind the further vehicle 16. Then ego vehicle 10 determine that with the movement of further vehicles 14, 16 the parking slot 28 reaches a sufficient space to allow the parking and it command the movements.

**Reference signs list**

| | |
|---|---|
| motor vehicle | 10 |
| road | 12 |
| further motor vehicle | 14 |
| further motor vehicle | 16 |
| further motor vehicle | 18 |
| further motor vehicle | 20 |
| sensor | 22 |
| communication device | 24 |
| control device | 26 |
| parking slot | 28 |
| space | 30 |
| space | 32 |
| arrow | 34 |
| arrow | 36 |
| length of the vehicle to be parked | L |
| width of the parking slot | W, W' |
| minimum size of the parking slot | Wmin |

## Claims

1. A method for automatically providing a parking slot (28) for a motor vehicle (10), which parking slot (28) is limited by at least one further motor vehicle (14, 16), the method comprising the following steps:
- Detecting a possible request to park the vehicle (10) into the parking slot (28) as well as a minimum size (Wmin) of the parking slot (28) required for parking this vehicle (10) and the size (W) of the parking slot determined by the current position of the at least one further motor vehicle (14, 16) respectively out of a position external to the vehicle (10) to be parked, and
- Adjusting the position of the at least one further motor vehicle (14, 16) such that the size (W') of the parking slot (28) corresponds at least to the minimum size (Wmin) of the parking slot (28) required for parking the vehicle (10).

2. The method according to claim 1, **characterized in that** the position external to the vehicle (10) to be parked is the position of at least one of the further motor vehicles (14, 16) or at least one traffic infrastructure device.

3. The method according to 2, **characterized in that** the detection step is performed by at least one sensor (22) of the at least one further motor vehicles (14, 16) and/or of the at least one traffic infrastructure device.

4. The method according to any one of claims 1 to 3, **characterized in that** the minimum size (Wmin) of the parking slot (28) required for parking the vehicle (10) is determined by measuring the length (L) of the motor vehicle (10) to be parked and/or by identification of the vehicle type of the motor vehicle (10) to be parked.

5. The method according to any one of claims 1 to 4, **characterized in that** the adjustment of the position of the further motor vehicle (14) or at least one of the further motor vehicles (14, 16) is a moving of said further motor vehicle (14, 16) performed by use of a driver assistance devices of the corresponding further motor vehicle (14, 16).

6. The method according to any one of claims 1 to 5, **characterized in that** the adjustment of the position of the at least one further motor vehicle (14) is controlled by a control device (26) of a system for automatically providing the parking slot (28).

7. The method according to claim 6, **characterized in that** the control device (26) is part of one of the further motor vehicles (14, 16) or part of the at least one traffic infrastructure device.

8. The method according to any one of claims 1 to 5, **characterized by** a further step of: Determining whether there is sufficient space (30, 32) for adjusting the position of the further motor vehicles (14, 16) such that the size W' of the parking slot (28) corresponds at least to the minimum size Wmin of the parking slot (28).

9. A computer program product comprising computer-executable program code portions having program code instructions configured to execute the method according to one of claims 1 to 8.

10. A system for automatically providing a parking slot (28) for a motor vehicle (10), which parking slot (28) is limited by at least one further motor vehicle (14, 16), the system comprises at least one sensor (22) for monitoring the traffic and a control device (26) for controlling an adjustment of the position of the further motor vehicle or at least one of the further motor vehicles (14, 16) and is configured to perform the following steps:
- Detecting a possible request for parking the vehicle (10) into the parking slot (28) as well as a minimum size (Wmin) of the parking slot (28) required for parking this vehicle (10) and the size (W) of the parking slot (28) determined by the current position of the at least one further motor vehicle (14, 16) respectively out of a position external to the vehicle (10) to be parked by use of the at least one sensor (22); and
- Commanding an adjustment of the position of the at least one further motor vehicle (14, 16) by use of the control device (26) such that the size (W') of the parking slot (28) corresponds at least to the minimum size (Wmin) of the parking slot (28) required for parking the vehicle (10).

11. The system according to claim 10, **characterized in that** the system is arranged for performing the method according to one of claims 1 to 8.

12. The system according to claim 10 or 11, **characterized in that** the control device (26) is arranged for adjusting the position of the further motor vehicle (14) or at least one of the further motor vehicles (14, 16) by use of a driver assistance devices of the corresponding further motor vehicle (14, 16).

13. The system according to any one of claims 10 to 12, **characterized in that** the control device (26) is a computerised control device (26) with a processor and a memory.
